# EUROPEAN PATENT SPECIFICATION

(11) **EP 0 772 978 B1**
(45) Date of publication and mention of the grant of the patent: **10.11.1999**
(21) Application number: 96610043.0
(22) Date of filing: 05.11.1996
(51) Int. Cl.: A23K 1/00

(54) **An additive for drinking water and feeding stuff for animals and a method for admixture**
Trinkwasser- und Futtermittelzusatz und Additionsverfahren
Additif pour l'eau potable et pour la nourriture pour animaux et procédé pour effectuer des additions

(30) Priority: 10.11.1995 DK 125595
(43) Date of publication of application: 14.05.1997
(73) Proprietor: Loevens Kemiske Fabrik (Leo Pharmaceutical Products), 2750 Ballerup (DK)
(72) Inventor: Bendixen, Otto, 2730 Herlev (DK); Duer, Victor, 3500 Vaerlose (DK)
(74) Representative: Lund, Preben

(56) References cited:
- EP-A- 0 154 959
- EP-A- 0 454 221
- EP-A- 0 659 337
- WO-A-93/19759
- GB-A- 1 561 136
- GB-A- 2 083 997
- US-A- 4 733 971
- DATABASE WPI Section Ch, Week 8603 Derwent Publications Ltd., London, GB; Class C04, AN 86-016993 XP002025729 & JP 60 239 403 A (YONEZAWA A) , 28 November 1985
- INDUSTRIES DE L'ALIMENTATION ANIMALE, vol. 13, 1978, FR, pages 11-25, XP002025728 M. CAMOUX: "L'aliment liquide"
- Römpp Lexikon Lebensmittelchemie, Thieme Verlag, Stuttgart, 1995, p. 663 - 664

## Description

The invention concerns an admixture product for drinking water or feed for animals, said admixture product containing mineral mixtures in fluid form, vitamin mixtures in fluid form and a phytase enzyme. The invention also concerns a method for addition.

Fodder raw materials for the production of feed for domestic animals are provided by nature in greater or smaller amounts with all of the nutrients for which an animal has use for growth and/or production.

However, the relationship between the nutrients is not balanced so that it meets the animal's needs. Similarly, the total amount of a series of essential nutrients lies below a level which is required to meet the animals' physiological needs for growth and/or production.

The balancing of the nutritional content in a ration of feed, and the increase of same so that it corresponds to the animals' needs, is normally carried out by adding one or more premixes containing amino acids, fat-/watersoluble vitamins, macro/micro minerals and possible growth-promoters and enzymes to the total portion of feed.

All of the individual raw materials for the production of such a premix (vitamin mixture) are produced in dry form as powder, crystals or granulates. For the same reason, all premixes are produced in dry form (powder mixtures) which are suitable for mixing together with ground grain products and/or protein feedstuffs at the feed factories or in the animal farmers' mixing plants.

After mixing of the premix and other fodder raw materials at the feed factory, the feed mixture is normally exposed out of regard for hygiene to a heat treatment of a minimum of 81°C. New process technology in the feed industry gives rise to this heat treatment often taking place at up to 105-110°C.

A number of the essential nutrients which form part of the premix, e.g. vitamin A, K, individual B vitamins and vitamin C and enzymes are sensitive to temperature.

The temperature-sensitivity is individual for the vitamins, but the degree of degradation increases with rising temperature. Already at 81°C there is a measurable loss of, for example, vitamin A, K and C, increasing to a loss of 30 to 40% and right up to 85 to 90% for the most temperature-sensitive at 105/110°C, depending among other things on time and process conditions. Enzymes are normally inactivated completely at temperatures in excess of approx. 70°C.

Consequently, modern process technology has the result that the domestic animals receive a lower dosage of vitamins than desired through industrially-produced feed.

Some of these problems can be solved by over-dosing, but this results in the animal farmer having to pay for the *added* vitamins - not that amount he receives in the finished feed.

In many of the farm mixing plants, use is made of the wet-feeding technique. This means that the whole feed mixture in powder form or pills containing premix is mixed in a tank with water or, for example, biproducts from the dairy industry, e.g. whey. This mixture is pumped forward to the feeding places. In these plants there is a risk that micro-nutrients stemming from the premix can separate, which results in an unequal distribution of these essential nutrients to the feeding places, i.e. some nutrients are dosed in too high a concentration to certain feeding places and in too low a concentration to others.

From WO 93/19759 it is known to add, among other things, phytase and D vitamins to dry feed in order to reduce the risk of tibial dyscondroplacia. The admixture is added to the dry feed. Out of regard for a possible subsequent sterilization, it will be necessary to add an excess of nutrients, in that the nutrients docompose during the sterilization process. The publication does not solve the problem of unequal dosing of micro-nutrients.

From US-A-4.740.373 it is known to mix dissolved minerals and vitamins for use as dietary supplement for animals and humans. In order to avoid the decomposition of the vitamins and herewith incorrect dosing, there is added an unsaturated, organic acid as stabilizer. This has the disadvantage that important nutrients are destroyed as a consequence of the pH-reduction brought about by the addition, including, e.g. B vitamins. Moreover, the patent publication does not contain any addition of iron.

From WO 93/16175 it is known to add phytase together with a stabilizing factor. e.g. urea, in order to ensure that the enzyme maintains its activity despite longer-time storage. The stabilizing phytase can, for example, be added to animal feeds. The publication thus does not solve the problem of unequal dosing of micro-nutrients.

From EP-A-0454221 there is known a feed supplement in liquid form, and where the problem with the phosphor's ability to form insoluble compounds with minerals is solved by adding an acid and hereby reduce the pH-value. However, this has the disadvantage that important, possible vitamins decompose as a consequence of the low pH-value. Moreover, the invention does not allow for the use of iron in dissolved form.

### Advantages of the invention

It is the object of the invention to provide an admixture product which allows a correct, uniform dosing and addition of the necessary nutrients, and without this condition being ruined as a consequence of precipitation of, among other things, phosphor connections, and destruction and precipitation of important nutrients in general, while at the same time allowing the use of phytin-bound phosphor. This object is achieved with an admixture product of the kind disclosed in the preamble, and where the admixture product contains the phytase enzyme in dissolved form, and that the admixture product is divided into at least two separate fractions prior to the addition to the drinking water or the feed, one of said fractions being comprised of the mineral mixture.

The mineral mixture at least contains iron compounds and a complex binder.

By separating the two fractions, minerals and vitamins respectively, an inexpedient destruction/precipitation is avoided, and moreover by adding the enzyme phytase it is achieved that the animals can utilise that part of the natural content of phosphor which is normally bound in the feed in the form of phytin, and which cannot be utilised by our common, non-cud-chewing domestic animals.

By adding this enzyme, the need for phosphor is reduced to such an extent that it becomes technically possible to produce solutions which do not contain heavy soluble phosphates, and which do not bind the added minerals/vitamins nor any parts of these. In the cases where the admixture product is added to the drinking water, the phytase will act on the phytin which is in the feed in the animal's digestive system, in that the phytase continues to split the phytin, also after it has come down into the digestive system.

Furthermore, it is also hereby achieved that the load on the environment in the form of non-utilized phosphate is reduced.

By composing the admixture product according to the invention as disclosed in claim 1, it is ensured that the iron ions are not converted to heavy soluble compounds which cannot be utilized by the organism and which will block the plant which is used for the dosing, whereby the animals' need for the very important mineral iron are met at the same time that the need for phosphor is met, and without any surplus addition of this having taken place.

By composing the admixture product according to the invention as disclosed in claim 2, there is achieved an expedient composition of the product, and where the separation of phytase from the vitamin mixture makes it possible for this to be composed without special regard to the active enzyme, in that for example the sodium riboflavin-phosphate normally used may be replaced by, e.g. riboflavin-tetrabutyrate, whose enzyme and vitamin mixture cannot be held separate.

Otherwise, the phytase will split the phosphate from the sodium riboflavin-phosphate.

By composing the admixture product according to the invention as disclosed in claim 2, there is achieved an expedient handling of feed and admixture product.

By composing the admixture product according to the invention as disclosed in claim 4, it is achieved that the basic needs for micro-nutrients are covered regardless of the species of animal.

By composing the admixture product according to the invention as disclosed in claim 5, it is achieved that the fat-soluble vitamins are also dissolved homogenously and that the mixture thus constitutes a homogenous mixture.

By composing the admixture product according to the invention as disclosed in claim 6, it is ensured that no destruction of vitamins takes place.

By composing the admixture product according to the invention as disclosed in claim 7, an exact and individually-adjusted dosing is achieved which also meets the animals' needs for micro-nutrients depending on the animals' current stage of development.

By composing the admixture product according to the invention as disclosed in claim 8, it is achieved that the phytase has a longer time in which to react and thus splits the phytin among other things to a phosphate which is usable for the animal.

The invention also concerns a method for the use of the admixture product according to the invention, and where the feed is provided with a vitamin solution which is correctly dosed for the animal with regard to composition and concentration, and where the feed is provided with a mineral solution which is correctly dosed for the animal with regard to composition and concentration, and that said mixtures are physically separated from each other prior to being added, and that the solutions are added to the feed successively or simultaneously, and that the feed is also provided with the enzyme phytase, said feed/drinking water being subsequently consumed by the animals.

There is hereby achieved an expedient method for the feeding of animals, and whereby it is ensured that under-dosing due to handling or due to chemical reactions is avoided.

The examples in the following are composed so that these constitute a description of how the invention can be implemented for an expert in the field, and thus they do not limit the invention.

### Example 1

For a herd of 1,000 pigs raised for slaughtering and with a weight of between 25 and 100 kg, 2,000-3,000 kg of feed daily are used with the following composition:

| | |
|---|---|
| Animal fat | 2.50% |
| Soybeanmeal | 22.70% |
| Barley, ground | 35.48% |
| Wheat, ground | 35.48% |
| Bonemeal | 1.30% |
| Chalk | 1.40% |
| Salt | 0.50% |
| Lysine premix (40%) | 0.23% |
| Methionine premix (40%) | 0.12% |
| Fluid vitamins | 0.11% |
| Fluid minerals | 0.17% |
| Phytase solution | 0.01% |
| | 100.00% |

This feed mixture is mixed with 4,000-6,000 litres of water, and following a suitable stirring time is pumped out to the individual pigsties.

By means of the dosing system, the feed is distributed to the individual pigsties in proportion to the number of pigs and their feeding requirements.

The fluid vitamin, mineral and phytase solutions, which are delivered and stored in plastic containers, are connected to the mixing vessel by means of an automatic dosing system.

This feed mixture has the following nutritional content per 100 kg:

| | |
|---|---|
| FUs per 100 kg | 110 |
| (FUs = feed units for pigs) | |

| | g/FUs |
|---|---|
| Digestible raw protein | 135.0 |
| Cellulose | 34.0 |
| Raw fat | 44.0 |
| Digestible lysine | 7.3 |
| Digestible methionine | 2.3 |
| Digestible methionine + cystine | 4.7 |
| Digestible threonine | 4.8 |
| Calcium | 7.5 |
| Phosphor | 4.5 |
| Phytin-bound phosphor | 2.9 |
| DC pig raw protein | 82.6% |
| (DC = digestibility coefficient) | |

The vitamin solution used has the following composition:

### Vitamin solution

| | |
|---|---|
| Vitamin-A-Acetate | 0.160% |
| Vitamin D₃ | 0.020% |
| Alpha-tocopheryl-acetate | 6.200% |
| Ethoxyquine | 0.080% |
| Glycerol polyethylene glycol-ricinoleate | 18.000% |
| Vitamin B₁₂, 0.5% sol. | 0.400% |
| Menadione sodium bisulphite | 0.410% |
| Pantothenol | 1.000% |
| Nicotine-amide | 2.000% |
| Thiamine Hydrochloride | 0.200% |
| Sodium-Riboflavin phosphate | 0.280% |
| Pyridoxin Hydrochloride | 0.300% |
| Biotin, 2.0% sol. | 0.250% |
| Potassium sorbate | 0.200% |
| Propylene-glycol | 10.000% |
| Water | 60.500% |
| | 100.000% |

The mineral solution used has the following composition:

### Mineral solution

| | |
|---|---|
| Ferro-sulphate, heptahydrate | 15.000% |
| Citric acid, monohydrate | 7.530% |
| Zinc sulphate, heptahydrate | 22.000% |
| Manganese sulphate, monohydrate | 5.330% |
| Copper sulphate, pentahydrate | 5.330% |
| Potassium iodide | 0.017% |
| Sodium selenate | 0.029% |
| Water | 44.764% |
| | 100.000% |

### Phytase solution

The phytase solution used has a phytase activity of 5,000 PTU/g (phytase units/g). With a dosing of 500 PTU/kg, 500 micromol of phosphor is split per minute. This can release approx. 0.8 g/kg per hour digestible phosphor.

The effect of the phytase does not stop even though the feed is eaten, in that the phytase continues to split phytin also after it has entered the digestive system.

### Example 2

To the drinking water for a herd of 200 small pigs, fluid vitamin, mineral and phytase solutions are added daily, so that this corresponds to a dosing of 0.1%, 0.25% and 0.01% of the distributed amount of feed with 1 FUs/kg.

The following vitamin, mineral and phytase solutions are used:

### Vitamin solution

| | |
|---|---|
| Vitamin-A-Acetate | 0.320% |
| Vitamin D₃ | 0.040% |
| Alpha-tocopheryl-acetate | 6.200% |
| Ethoxyquin | 0.080% |
| Glycerol polyethylene glycol-ricinoleate | 18.000% |
| Vitamin B₁₂, 0.5% sol. | 0.400% |
| Menadione sodium bisulphite | 0.410% |
| Pantothenol | 1.000% |
| Nicotine-amide | 2.000% |
| Thiamine Hydrochloride | 0.200% |
| Sodium-Riboflavin phosphate | 0.560% |
| Pyridoxin Hydrochloride | 0.300% |
| Biotin, 2.0% sol. | 1.000% |
| Potassium sorbate | 0.200% |
| Propylene-glycol | 10.000% |
| Water | 59.290% |
| | 100.000% |

### Mineral solution

| | |
|---|---|
| Ferro-sulphate, hepta-hydrate | 12,500% |
| Citric acid, mono-hydrate | 6.250% |
| Zinc sulphate, hepta-hydrate | 8.250% |
| Manganese sulphate, mono-hydrate | 2.000% |
| Copper sulphate, penta-hydrate | 13.500% |
| Potassium iodide | 0.009% |
| Sodium selenate | 0.012% |
| Water | 57.479% |
| | 100.000% |

### Phytase solution

The phytase solution used has a phytase activity of 5,000 PTU/g. With a dosing of 500 PTU/kg, the phosphor split rate is 500 micromol phosphor per minute. During the course of one hour, there is split approx. 0.8 g/kg digestible phosphor.

The three solutions are added to the watering system by means of three dosing units which are mounted on the water supply pipe. It can be an advantage to use dosing units which use an injector principle.

The three dosing units are individually regulated to provide the desired dosing. The dosing is calculated in proportion to the expected consumption of water and feed.

The drinking water system is mounted with drinking valves or drinking cups in the individual sties, so that the small pigs can provide themselves with drinking water to which the vitamin, mineral and phytase solutions decribed above have been added.

### Example 3

On a poultry farm with chickens raised for slaughtering, the following solutions are added to the water which is supplied to the drinking water dispensers.

These solutions have the following composition:

### Vitamin and phytase solution

| | |
|---|---|
| Vitamin-A-Acetate | 0.160% |
| Vitamin D₃ | 0.042% |
| Alpha-tocopheryl-acetate | 1.520% |
| Ethoxyquin | 0.027% |
| Glycerol polyethylene glycol-ricinoleate | 5.000% |
| Vitamin B₁₂, 0.5% sol. | 0.134% |
| Menadione sodium bisulphite | 0.167% |
| Pantothenol | 0.333% |
| Nicotine-amide | 1.667% |
| Thiamine Hydrochloride | 0.074% |
| Riboflavin tetrabutyrate | 0.503% |
| Pyridoxin Hydrochloride | 0.100% |
| Biotin, 2.0% sol. | 0.250% |
| Choline chloride | 8.200% |
| Betaine | 17.330% |
| Folinic acid | 0.050% |
| Potassium sorbate | 0.200% |
| Propylene-glycol | 10.000% |
| Phytase solution | 3.840% |
| Water | 50.403% |
| | 100.000% |

### Mineral solution

| | |
|---|---|
| Ferro-sulphate, heptahydrate | 12.500% |
| Citric acid, monohydrate | 6.200% |
| Zinc sulphate, heptahydrate | 11.280% |
| Copper sulphate, pentahydrate | 4.000% |
| Potassium iodide | 0.030% |
| Sodium selenate | 0.029% |
| Water | 65.961% |
| | 100.000% |

These solutions are added to the drinking water in proportion to the expected consumption of water and feed, so that it corresponds to an average dosing of 0.3% and 0.25% of the feed.

The additive is thus mixed on site at the farm where it is used while using the dosing system and by mixing it directly in the wet feed (i.e. feed mixed with water or, for example, biproducts from the dairy industry) or in the drinking water.

The pH-value of the vitamin solution before mixing is in the order of 4-7, preferably 5-7, while the pH-value of the mineral solution typically lies in the range 1-2. The finished, blended product comprising feed or drinking water and the admixture product has a pH-value of about 5-7.

In all of the three examples, the mineral, vitamin and phytase solutions are dosed and composed while taking into account the animal species, the stage of development and the composition of the feed. This results not only in an optimum utilisation of the nutrients, but also a minimum of waste, in that the animals can utilise the added nutrients, whereby the phosphate discharge is minimised.

The stability of the nutrients in the fluid product can be improved by the addition of various stabilizers, such as antioxydants, emulsifiers and complex formers.

The result is that the stability is optimized, whereby the supply to the animals, primarily poultry and pigs, becomes more stable and in accordance with what has been planned. Similarly, there can be added components which act as growth-impeders for the micro-organisms, for example potassium sorbate and propylene glycol.

The production as described above of the vitamin and micro-mineral premixes in fluid form, together with fluid phytase enzyme for mixing-in and dosing together with the animals' drinking water and/or feed, can also include amino acids and other enzymes and antibiotic growth-promoters and macro-minerals.

The actual addition of the admixture products to the feed or the drinking water can be effected on the farm from separate containers by means of pumps and dosing systems connected to the containers. The addition is carried out on the basis of predetermined criteria and as a function of the species of animal, the stage of development, the character of the feed etc.

The addition can also be effected by means of an injector system, possibly such as that marketed and known under the name "DOSATRON", and which allows a stepless regulation of the admixture products.

## Claims

1. Admixture product for drinking water or feed for animals, said admixture product containing mineral mixtures in fluid form, vitamin mixtures in fluid form and a phytase enzyme in dissolved form, **characterized** in that the admixture product is physically separated into at least two separate fractions before being added to the drinking water or the animal feed and before being subsequently consumed by the animals in that one of said fractions constitutes the mineral mixture, the mineral mixture at least contains iron compounds and a complex binder, e.g. tetracemine disodium or citric acid.

2. Admixture product according to claim 1, **characterized** in that the admixture product consists of three separate fractions, the first fraction containing dissolved phytase enzyme, the second fraction containing dissolved vitamin mixture, and the third fraction containing dissolved mineral mixture.

3. Admixture product according to any of the foregoing claims, **characterized** in that the separate fractions of the admixture are mixed together during or just before their addition to the animal feed or drinking water.

4. Admixture product according to any of the foregoing claims, **characterized** in that the mineral mixture at least contains iron, manganese, zinc, copper and iodine compounds, and that the vitamin mixture at least contains A-, D-, E- and B-vitamin solutions.

5. Admixture product according to any of the foregoing claims, **characterized** in that the vitamin mixture contains an emulsifier.

6. Admixture product according to any of the foregoing claims, **characterized** in that the pH-value for the vitamin mixture lies in the interval 4-7, preferably 5-7.

7. Admixture product according to any of the foregoing claims, **characterized** in that the composition and concentration of the mineral mixture and the vitamin mixture are adjusted to suit the selected species of animal and the animal's stage of development.

8. Admixture product according to claims 1, 2 and 4-7, **characterized** in that the phytase enzyme is added to the feed before or at the same time as the remaining admixture products.

9. Method of using of the admixture product according to claims 1-8, **characterized** in that to the feed there is added a vitamin solution which is correctly dosed for the animal with regard to composition and concentration, and that to feed there is added a mineral solution which is correctly dosed for the animal with regard to composition and concentration, that said mixtures are physically separated from each other before being added, and that the solutions are added to the feed/drinking water successively or simultaneously, and that to the feed there is also added the enzyme phytase, said feed/drinking water being subsequently consumed by the animals.

10. Method according to claim 9, **characterized** in that the phytase is added to the feed before or at the same time as the vitamin mixtures and the mineral mixtures.

## Patentansprüche

1. Zusatzprodukt zu Trinkwasser oder Futter für Tiere, welches Mineralgemische in fluider Form, Vitamingemische in fluider Form und das Enzym Phytase in gelöster Form enthält, dadurch gekennzeichnet, daß das Zusatzprodukt in mindestens zwei gesonderte Fraktionen physikalisch aufgeteilt ist, bevor es dem Trinkwasser oder dem Tierfutter zugesetzt wird und bevor es anschließend durch die Tiere verzehrt wird, wobei eine dieser Fraktionen das Mineralgemisch darstellt, wobei das Mineralgemisch mindestens eine Eisenverbindung und einen Komplexbildner, beispielsweise Tetracemin-dinatrium oder Zitronensäure enthält.

2. Zusatzprodukt nach Anspruch 1, dadurch gekennzeichnet, daß das Zusatzprodukt aus drei gesonderten Fraktionen besteht, wobei die erste Fraktion gelöstes Phytase-Enzym, die zweite Fraktion gelöstes Vitamingemisch und die dritte Fraktion gelöstes Mineralgemisch enthält.

3. Zusatzprodukt nach einem der vorhergehenden Ansprüche, dadurch gekennzeichnet, daß die gesonderten Fraktionen des Gemisches während oder unmittelbar vor ihrer Zugabe zu dem Tierfutter oder Trinkwasser miteinander vermischt werden.

4. Zusatzprodukt nach einem der vorhergehenden Ansprüche, dadurch gekennzeichnet, daß das Mineralgemisch mindestens Eisen-, Mangan-, Zink-, Kupfer- und Iodverbindungen enthält und daß das Vitamingemisch Lösungen mindestens der Vitamine A, D, E und B enthält.

5. Zusatzprodukt nach einem der vorhergehenden Ansprüche, dadurch gekennzeichnet, daß das Vitamingemisch einen Emulgator enthält.

6. Zusatzprodukt nach einem der vorhergehenden Ansprüche, dadurch gekennzeichnet, daß der pH-Wert des Vitamingemisches im Bereich von 4 bis 7, vorzugsweise 5 bis 7 liegt.

7. Zusatzprodukt nach einem der vorhergehenden Ansprüche, dadurch gekennzeichnet, daß die Zusammensetzung und Konzentration des Mineralgemisches und des Vitamingemisches so eingestellt werden, daß sie der gewählten Tierart und der Entwicklungsstufe des Tieres angepaßt sind.

8. Zusatzprodukt nach Ansprüchen 1, 2 und 4 bis 7, dadurch gekennzeichnet, daß das Phytase-Enzym vor oder gleichzeitig mit der Zugabe der verbleibenden Produkte des Zusatzes dem Futtermittel zugegeben wird.

9. Verfahren zur Verwendung des Zusatzproduktes nach Ansprüchen 1 bis 8, dadurch gekennzeichnet, daß eine Vitaminlösung, die im Hinblick auf Zusammensetzung und Konzentration für das Tier richtig dosiert ist, dem Futter zugegeben wird und daß eine Minerallösung, die im Hinblick auf Zusammensetzung und Konzentration für das Tier richtig dosiert ist, dem Futter zugegeben wird, daß diese Gemische vor ihrer Zugabe physikalisch getrennt voneinander vorliegen und daß die Lösungen dem Futter/Trinkwasser nacheinander oder gleichzeitig zugegeben werden, und daß außerdem das Enzym Phytase dem Futter zugegeben wird, und das Futter/Trinkwasser danach durch die Tiere verzehrt wird.

10. Verfahren nach Anspruch 9, dadurch gekennzeichnet, daß die Phytase dem Futter vor der Zugabe der Vitamingemische und der Mineralgemische oder gleichzeitig damit zugegeben wird.

## Revendications

1. Produit d'addition pour l'eau potable ou la nourriture pour animaux, ledit produit d'addition contenant des mélanges de minéraux sous forme fluide, des mélanges de vitamines sous forme fluide et une enzyme phytase sous forme dissoute, caractérisé en ce que le produit d'addition est physiquement séparé en au moins deux fractions séparées avant addition à l'eau potable ou à la nourriture pour animaux et avant d'être ensuite consommé par les animaux et en ce que l'une des fractions constitue le mélange de minéraux, ledit mélange de minéraux contenant au moins un composé de fer et un liant complexe, par exemple le tétracémine disodium ou l'acide citrique.

2. Produit d'addition selon la revendication 1, caractérisé en ce que le produit d'addition consiste en trois fractions séparées, la première fraction contenant l'enzyme phytase dissoute, la deuxième fraction contenant le mélange de vitamines dissous et la troisième fraction contenant le mélange de minéraux dissous.

3. Produit d'addition selon l'une quelconque des revendications précédentes, caractérisé en ce que les fractions séparées du produit d'addition sont mélangées ensemble pendant ou juste avant leur addition à la nourriture pour animaux ou à l'eau potable.

4. Produit d'addition selon l'une quelconque des revendications précédentes, caractérisé en ce que le mélange de minéraux contient au moins des composés de fer, de manganèse, de zinc, de cuivre et d'iode et en ce que le mélange de vitamines contient au moins des solutions de vitamines A, D, E et B.

5. Produit d'addition selon l'une quelconque des revendications précédentes, caractérisé en ce que le mélange de vitamines contient un émulsifiant.

6. Produit d'addition selon l'une des revendications précédentes, caractérisé en ce que la valeur du pH pour le mélange de vitamines est située dans la plage de 4 à 7, de préférence de 5 à 7.

7. Produit d'addition selon l'une des revendications précédentes, caractérisé en ce que la composition et la concentration du mélange de minéraux et du mélange de vitamines sont réglées pour convenir à l'espèce sélectionnée d'animal et à l'étape de développement de l'animal.

8. Produit d'addition selon les revendications 1, 2 et 4-7, caractérisé en ce que l'enzyme phytase est ajoutée à la nourriture avant ou en même temps que les produits d'addition restants.

9. Procédé d'utilisation du produit d'addition selon les revendications 1 à 8, caractérisé en ce qu'on ajoute à l'alimentation une solution de vitamines qui est correctement dosée pour l'animal en ce qui concerne sa composition et sa concentration et en ce qu'on ajoute à la nourriture une solution de minéraux qui est correctement dosée pour l'animal en ce qui concerne sa composition et sa concentration, en ce que lesdits mélanges sont physiquement séparés l'un de l'autre avant d'être ajoutés, en ce que les solutions sont ajoutées à la nourriture et/ou à l'eau potable successivement ou simultanément et en ce qu'il est également ajouté à la nourriture l'enzyme phytase, ladite nourriture et/ou l'eau potable étant ensuite consommées par les animaux.

10. Procédé selon la revendication 9, caractérisé en ce que la phytase est ajoutée à l'alimentation avant ou en même temps que les mélanges de vitamines et les mélanges de minéraux.
